(19) **Europäisches Patentamt**
**European Patent Office**
**Office européen des brevets**

(11) **EP 3 680 640 B1**

(12) **EUROPEAN PATENT SPECIFICATION**

(45) Date of publication and mention
of the grant of the patent:
**05.03.2025 Bulletin 2025/10**

(51) International Patent Classification (IPC):
***G01M 99/00*** *(2011.01)* ***B60J 7/057*** *(2006.01)*

(21) Application number: **19150780.5**

(52) Cooperative Patent Classification (CPC):
**G01M 99/008**

(22) Date of filing: **08.01.2019**

(54) **OPEN ROOF ASSEMBLY TESTING METHOD AND DEVICE**

PRÜFVERFAHREN UND -VORRICHTUNG FÜR OFFENE DACHANORDNUNG

PROCÉDÉ ET DISPOSITIF DE TEST D'ASSEMBLAGE DE TOIT OUVERT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**15.07.2020 Bulletin 2020/29**

(73) Proprietor: **Inalfa Roof Systems Group B.V.
5807 GW Oostrum (NL)**

(72) Inventors:
• **Schwepper, Gerrit
45475 Kamp-Lintfort (DE)**

• **Craane, Dennie Wilhelmus Hendrikus
6536 BA Nijmegen (NL)**

(74) Representative: **De Vries & Metman
Overschiestraat 180
1062 XK Amsterdam (NL)**

(56) References cited:
CN-A- 104 977 110     CN-A- 106 197 990
CN-A- 107 389 182     CN-A- 107 560 843
CN-A- 107 782 371     CN-U- 205 192 673
US-A1- 2002 117 983

## Description

The invention relates to a method for testing an open roof assembly. In particular, the open roof assembly is tested for determining a pinch force. The present invention further relates to a device for testing the open roof assembly and a computer program product for testing the open roof assembly.

An anti-trap system (ATS) is commonly used in an open roof assembly in order to avoid dangerous situations when a foreign object is becoming stuck between a closure member and an edge of the roof opening. This is done by stopping and reversing the movement of the closure member when the obstruction is detected so as to allow the foreign object to be removed from this position obstructing the closure member.

A known method of detection of the presence of an obstructing foreign object is an indirect measurement. An increase in the resistance within the system is detected by measuring the motor speed and/or the electrical current supplied to the motor. With the increasing electrical current, the torque of the motor increases and thus an exerted force increases. This force is herein referred to as a pinch force. Of course, it is desirable to keep the pinch force as small as possible. Further, in many, if not all, national and regional vehicle safety regulations, a maximum pinch force threshold is defined. So, for any open roof assembly that is mounted in a vehicle, it is at least to be ensured that the maximum pinch force does not exceed such a predetermined threshold. The above-indicated indirect measurement is usually performed by a control unit dedicated to the open roof assembly. In particular, the open roof assembly may be supplied to a vehicle manufacturer including such dedicated control unit.

The known dedicated control unit may store information about the open roof assembly. For example, a force reference field may be stored in the dedicated control unit. Such a force reference field may be generated during manufacturing of the open roof assembly and comprises data relating to a nominal current to be supplied to the motor for opening and closing the open roof assembly. An actual current may then be compared to the nominal current and a significant deviation from the nominal current is then considered an indication of an object being pinched. With a dedicated control unit, this process and an exerted pinch force may be determined and tested during manufacturing, thereby ensuring a sufficiently small maximum pinch force, as suggested in **e.g.** CN205192673U, CN107782371, CN106197990, CN107389182, CN107560843, CN104977110 and US2002/117983.

On the other hand, an open roof assembly may be manufactured and supplied without a dedicated control unit. In such circumstances, the vehicle manufacturer may apply a separately supplied control unit. For example, a vehicle control unit may be arranged in a vehicle for controlling multiple devices and functions in the vehicle, including the open roof assembly. Due to the omission of a dedicated control unit, testing the open roof assembly for a maximum pinch force during manufacturing becomes more challenging. For example, a test device may be developed using one such vehicle control unit. However, developing such test device is time-consuming and involves significant costs. Developing such test device for each vehicle type and each corresponding open roof assembly further increases the costs. Moreover, in certain circumstances, e.g. due to legal limitations, developing and installing such a test device may not even be possible.

It is an object of the present invention to provide a method and device for testing an open roof assembly, wherein the open roof assembly is not provided with a dedicated control unit during manufacturing.

In a first aspect, the object is achieved in a method according to claim 1. An open roof assembly to be tested in accordance with the method comprises a frame having a roof opening, a moveably arranged closure member and a motor drive assembly for moving the closure member. In a closed position, the roof opening is covered by the closure member and in an open position the roof opening is at least partly uncovered. The method according to the present invention comprises providing a test device comprising a generic control unit. The test device further comprises a force sensitive sensor operatively coupled to the generic control unit and configured to output force data representing a force exerted on the force sensitive sensor and a drive circuitry operatively coupled to the generic control unit and configured to operate the motor drive assembly of the open roof assembly. The method further comprises the steps of operatively coupling the motor drive assembly to the drive circuitry; and positioning the force sensitive sensor in the roof opening. The method further comprises operating the generic control unit to move the closure member from the open position to the closed position such that the closure member collides with the force sensitive sensor; to receive the corresponding force data from the force sensitive sensor; and to determine from the force data a system property constant, wherein the system property constant is representative for a maximum pinch force of the open roof assembly.

In the method according to the present invention, a generic control unit is used to perform a pinch test. The generic control unit does not need to have any particular predetermined information like parameters or constants. The generic control unit is configured to move the closure member through controlling the drive circuitry and the motor drive assembly. Essentially, the generic control unit merely provides a direct motor control.

Further, the generic control unit is configured to receive force data from the force sensitive sensor, in particular simultaneously with driving the closure member. With driving the closure member and receiving force data generated by driving the closure member against the force sensitive sensor, the generic control unit is enabled to determine a system property constant. The system property constant is a constant value of a system property, wherein the system property relates to the maximum pinch force such that determining the system property constant is representative for the maximum pinch force that may be exerted when the open roof assembly is mounted in a vehicle and coupled to an operational control unit, such as a dedicated control unit or a vehicle control unit. As above described, the operational control unit may be provided with user functionality, advanced control algorithms, and the like. Such functions and algorithms are not needed or used by the generic control unit.

According to the invention, the test device further comprises an electrical current sensor configured to output current data representing an electrical current to a motor of the motor drive assembly and a displacement sensor configured for outputting displacement data representing a displacement of the closure member. The step d2 of the method further comprises to receive the current data and the displacement data, wherein the current and displacement data correspond to step d1. According to the invention, the system property constant is a torque-related constant correlating the electrical current supplied to the motor and a torque generated by the system and as applied to the force sensitive sensor by the closure member. It has been found that such a torque-related constant is a good predictor for a maximum pinch force generated in practical conditions in a vehicle.

In a particular embodiment, the torque-related constant is determined as a ratio of a change in electrical current and a corresponding change in torque. So, instead of determining the torque-related constant by an absolute measurement of the electrical current and the corresponding generated torque, it has been found that a slope of a graph in which current is plotted against torque is a good predictor. This slope is easily derived by determining the ratio of a change in current and the corresponding change in torque.

In a particular embodiment, the displacement sensor is a Hall sensor coupled to the motor, wherein the Hall sensor is arranged and configured to determine a rotation of the motor. With the Hall sensor it is simple to derive a number of rotations of the motor and from those number of rotations an amount of displacement may easily be derived. Such a Hall sensor is commonly used in open roof assemblies and is therefore also very suited to be used in the present invention, although other displacement measurement techniques may be employed equally well.

In an embodiment of the method according to the present invention, the force sensitive sensor is provided with a predetermined stiffness. The predetermined stiffness provides for an increasing counterforce when the closure member collides with the force sensitive sensor and continues to move. With the increasing counterforce, the torque will be increasing with increasing electrical current being drawn by the motor. Thus, a change in torque and a corresponding change in electrical current may be generated and determined.

In a particular embodiment, the force sensitive sensor is provided with a calibrated linear spring having a predetermined spring constant. The calibrated linear spring is an easy and simple element to provide for the predetermined stiffness and may easily be replaced by another spring with a different spring constant such to be able to experiment and test depending on requirements, for example. In a more particular embodiment, however, the predetermined spring constant has a value corresponding to a stiffness of an element to be used in legal pinch force tests. As mentioned above, usually, there are legal requirements on a maximum pinch force. The legal framework usually stipulates how to determine such a maximum pinch force, including the stiffness of an object to be used for testing and establishing the actual pinch force. With this test method and test device, such a legal requirement may be taken into account to derive the system property constant representative of the maximum pinch force.

In a second aspect, the present invention provides for a test device for testing an open roof assembly according to claim 6, wherein the open roof assembly comprises a frame having a roof opening, a moveably arranged closure member and a motor drive assembly for moving the closure member, wherein in a closed position the roof opening is covered by the closure member and in an open position the roof opening is uncovered. The test device comprises a generic control unit; a force sensitive sensor operatively coupled to the generic control unit and configured to output force data representing a force exerted on the force sensitive sensor and for being position in the roof opening; and a drive circuitry operatively coupled to the generic control unit and configured to operate the motor drive assembly of the open roof assembly and for being operatively coupled to the motor drive assembly. The generic control unit is configured to move the closure member from the open position to the closed position such that the closure member collides with the force sensitive sensor; to receive the corresponding force data from the force sensitive sensor; and to determine from the force data a system property constant, wherein the system property constant is representative for a maximum pinch force of the open roof assembly.

According to the invention, the test device further comprises an electrical current sensor configured to output current data representing an electrical current to a motor of the motor drive assembly; and a displacement sensor configured for outputting displacement data representing a displacement of the closure member. The electrical current sensor and the displacement sensor are operatively coupled to the generic control unit for the generic control unit to receive the current data and the displacement data. Further, the system property constant is a torque-related constant correlating the electrical current supplied to the motor and a generated torque.

In a particular embodiment, the displacement sensor is a Hall sensor coupled to the motor, the Hall sensor being arranged and configured to determine a rotation of the motor.

In a particular embodiment, the force sensitive sensor is provided with a calibrated linear spring having a predetermined spring constant.

In a particular embodiment, the predetermined spring constant has a value corresponding to a stiffness of an element to be used in legal pinch force tests.

In a third aspect, the present invention provides a computer program product according to claim 9 comprising computer readable instructions for instructing a generic control unit to execute the steps to move the closure member from the open position to the closed position such that the closure member collides with the force sensitive sensor; to receive the corresponding force data from the force sensitive sensor; and to determine from the force data a system property constant, the system property constant being representative for a maximum pinch force of the open roof assembly, which steps are part of the method according to claim 1.

Further scope of applicability of the present invention will become apparent from the detailed description given hereinafter. The detailed description refers to following drawings:

Fig. 1A    shows a perspective view of a vehicle roof with an open roof assembly;
Fig. 1B    shows an exploded view of the open roof assembly of Fig. 1A;
Fig. 2A    shows a top view of an open roof assembly coupled to a test device according to the present invention;
Fig. 2B    shows a side view of the open roof assembly and test device of Fig. 2A;
Fig. 3A    shows graph of a motor speed over time during execution of the method according to the present invention;
Fig. 3B    shows a graph of an electrical current supplied to a motor over time during execution of the method according to the present invention corresponding to Fig. 3A;
Fig. 3C    shows a graph of the electrical current over a generated torque based on the motor speed and the electrical current as shown in Figs. 3A and 3B;
Fig. 4A    illustrates a spread in maximum pinch force of a number of open roof assemblies; and
Fig. 4B    illustrates a relation between a torque-related constant and the maximum pinch force.

The present invention will now be described with reference to the accompanying drawings, wherein the same reference numerals have been used to identify the same or similar elements throughout the several views.

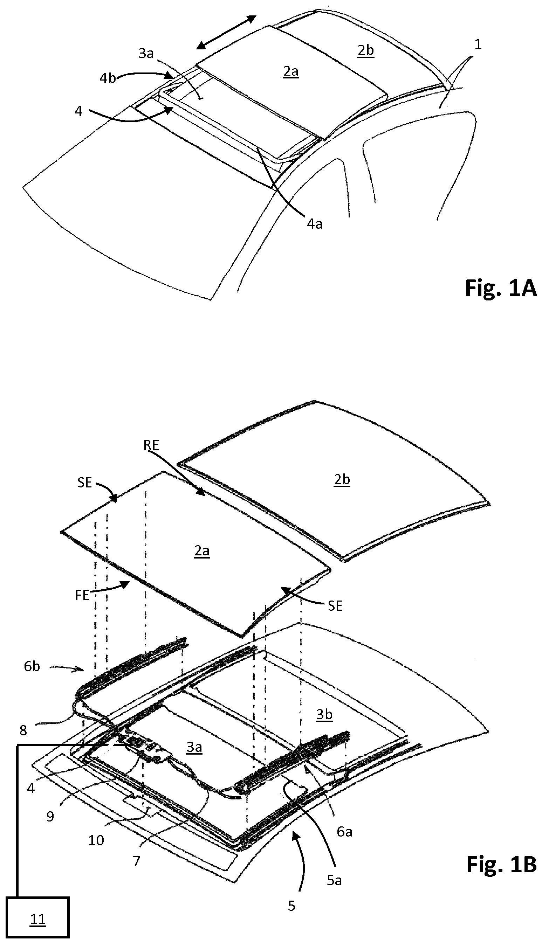

Fig. 1 illustrates a vehicle roof 1 having an open roof assembly arranged therein. The open roof assembly comprises a moveable panel 2a and a fixed panel 2b. The moveable panel 2a is also referred to as a closure member, since the moveable panel 2a is moveable over a first roof opening 3a such to enable to open and to close the first roof opening 3a. A wind deflector 4 is arranged at a front side of the first roof opening 3a.

In the illustrated embodiment, the moveable panel 2a may be in a closed position, which is a position wherein the moveable panel 2a is arranged over and closes the first roof opening 3a and thus usually is arranged in a plane of the vehicle roof 1. Further, the moveable panel 2a may be in a tilted position, which is a position wherein a rear end RE of the moveable panel 2a is raised as compared to the closed position, while a front end FE of the moveable panel 2a is still in the closed position. Further, the moveable panel 2a may be in an open position, which is a position wherein the moveable panel 2a is slid open and the first roof opening 3a is partly or completely exposed.

It is noted that the illustrated vehicle roof 1 corresponds to a passenger car. The present invention is however not limited to passenger cars. Any other kind of vehicles that may be provided with a moveable panel are contemplated as well.

Fig. 1B illustrates the same vehicle roof as shown in Fig. 1A having panels 2a and 2b. In particular, while Fig. 1A shows the open roof assembly in the open position, Fig. 1B is an exploded view of the open roof assembly in a closed position. Further, in this exploded view of Fig. 1B, it is shown that there is a second roof opening 3b. The first and second roof openings 3a, 3b are provided in a frame 5 of the open roof assembly. An edge 5a of the frame 5 defines the first roof opening 3a.

The second roof opening 3b is arranged under the fixed panel 2b such that light may enter a vehicle interior space through the fixed panel 2b, presuming that the fixed panel 2b is a glass panel or a similarly transparent panel, for example made of a plastic material or any other suitable material. The second roof opening 3b with a transparent or translucent fixed panel 2b is optional and may be omitted in another embodiment of the open roof assembly.

The wind deflector 4 is commonly a flexible material, e.g. a woven or non-woven cloth having through holes arranged therein, a web or a net. The flexible material is supported by a support structure 4a, e.g. a bar-like or tube-like structure, which structure is hingedly coupled, directly or indirectly, to the frame 5 at a hinge 4b.

The wind deflector 4 is arranged in front of the first roof opening 3a and adapts air flow when the moveable panel 2a is in the open position. In its raised position, the wind deflector 4 reduces inconvenient noise due to air flow during driving. When the moveable panel 2a is in the closed position or in the tilted position, the wind deflector 4 is held down below the front end FE of the moveable panel 2a.

Usually, the wind deflector 4 is raised by a spring force when the moveable panel 2a slides to an open position and the wind deflector 4 is pushed down by the moveable panel 2a when the moveable panel 2a slides back into its closed position. In Fig. 1A, the moveable panel 2a is shown in an open position and the wind deflector 4 is shown in a raised position. In the exploded view of Fig. 1B, the moveable panel 2a is shown in a closed position and the wind deflector 4 is correspondingly shown in a position in which it is held down.

Fig. 1B further illustrates a drive assembly having a first guide assembly 6a, a second guide assembly 6b, a first drive cable 7 and a second drive cable 8. The first and second guide assemblies 6a, 6b are arranged on respective side ends SE of the moveable panel 2a and may each comprise a guide and a mechanism. The guide is coupled to the frame 5, while the mechanism comprises moveable parts and is slideably moveable in the guide. The first and the second drive cables 7, 8 are provided between the mechanisms of the respective guide assemblies 6a, 6b and a drive motor 9.

The drive cables 7, 8 couple the drive motor 9 to the mechanisms of the respective guide assemblies 6a, 6b such that upon operating the drive motor 9, the mechanisms start to move. In particular, a core of the drive cable 7, 8 is moved by the drive motor 9 such to push or pull on the mechanisms of the respective guides 6a, 6b. Such a drive assembly is well known in the art and is therefore not further elucidated herein. Still, any other suitable drive assembly may be employed as well without departing from the scope of the present invention. Moreover, in a particular embodiment, a drive motor may be operatively arranged between the respective guides and the respective mechanisms of the guide assemblies 6a, 6b and, in such embodiment, a drive assembly may be omitted completely.

In the illustrated embodiment, the guide assemblies 6a, 6b may start movement with raising the rear end RE of the moveable panel 2a, thereby bringing the moveable panel 2a in the tilted position. Then, from the tilted position, the guide assemblies 6a, 6b may start to slide to bring the moveable panel 2a in the open position. The present invention is however not limited to such embodiment. For example, in another embodiment, the moveable panel 2a may be moveable to a tilted position by raising the rear end RE, while an open position is reached by first lowering the rear end RE and then sliding the moveable panel 2a under the fixed panel 2b or any other structure or element provided behind the rear end RE of the moveable panel 2a. In further exemplary embodiments, the moveable panel 2a may be merely moveable between a closed position and a tilted position or between a closed position and an open position.

In the illustrated embodiment, the drive motor 9 is mounted near or below the front end FE of the moveable panel 2a at a recess 10. In another embodiment, the drive motor 9 may be positioned at any other suitable position or location. For example, the drive motor 9 may be arranged near or below the rear end RE of the moveable panel 2a or below the fixed panel 2b.

A control unit 11 is schematically illustrated and is operatively coupled to the drive motor 9. The control unit 11 may be any kind of processing unit, either a software controlled processing unit or a dedicated processing unit, like an ASIC, as well known to those skilled in the art. The control unit 11 may be a stand-alone control unit or it may be operatively connected to another control unit, like a multipurpose, generic vehicle control unit. In yet another embodiment, the control unit 11 may be embedded in or be part of such a generic vehicle control unit. Essentially, the control unit 11 may be embodied by any control unit suitable for, capable of and configured for performing operation of the drive motor 9 and thus the moveable roof assembly.

The control unit 11 is commonly adapted to detect a situation wherein the moveable panel 2a is obstructed and cannot move. For example, a foreign object may be blocking the movement and may even be trapped between the moveable panel 2a and e.g. the frame 5. In such a situation, the control unit 11 needs to stop the attempt to move the moveable panel 2a and, preferably, reverse the movement direction in order to resolve a possible entrapment. Still, in accordance with national and/or regional legislation, it is preferred that the pinch force is not too high before the moveable panel 2a is reversed. In particular, a maximum pinch force is usually defined in the national or regional legislation and the maximum pinch force needs to remain below such legally binding maximum.

In order to detect a pinch or entrapment, an electrical current may be monitored and compared to a nominal electrical current. The nominal current may have been determined during manufacturing and/or during mounting in a vehicle roof as a calibration by opening and closing the moveable panel 2a. During this opening and closing, the electrical current consumed by the drive motor 9 is measured and stored as a reference current. It is noted that such nominal current may not be constant over the trajectory of the moveable panel 2a. For example, during closing, at a certain point of the trajectory, the moveable panel 2a may come into contact with the support structure 4a of the wind deflector 4 in order to push the wind deflector 4 down. Such pushing of the wind deflector 4 requires more power and as a result, the nominal current may be expected to increase. During normal operation, the electrical current consumed by the drive motor 9 is compared to the reference current to prevent a false detection of a pinch or entrapment.

If the control unit 11 is manufactured and supplied with the open roof assembly, it is possible to perform the above-described calibration during manufacturing. Then, a pinch test may be performed with the calibrated control unit 11 in order to determine whether the maximum pinch force does not exceed a predetermined maximum limit, e.g. the legal limit. However, if the control unit 11 will be supplied by the vehicle manufacturer and the open roof assembly is thus supplied to the vehicle manufacturer without a dedicated control unit 11, it is not possible to easily verify the maximum pinch force.

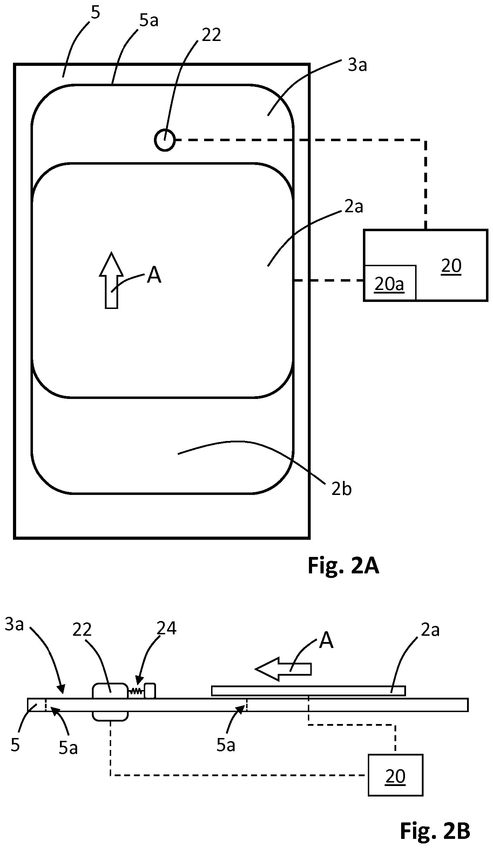

In accordance with the present invention, the maximum pinch force is predicted by performing a suitable test method using a corresponding test device. Figs. 2A and 2B illustrate such a test method and corresponding test device.

Figs. 2A and 2B show an open roof assembly having the frame 5 with the edge 5a defining the roof opening 3a. The moveable panel 2a is shown in the open position and is partly arranged over the fixed panel 2b. A force sensitive sensor 22 is arranged in the roof opening 3a and is operatively coupled to a generic control unit 20. The force sensitive sensor 22 is provided with an elastic spring 24 to provide a predetermined stiffness.

The generic control unit 20 is configured to directly control the drive motor through suitable drive circuitry 20a, which is operatively coupled to the drive assembly of the open roof assembly, in particular the drive motor. The generic control unit may, for example, be a general purpose computer having a suitable motor drive output circuit to enable sufficient electrical current supply, as apparent to those skilled in the art. Any other arrangement, assembly or device may be suitably applied as well without departing from the scope of the present invention.

The generic control unit 20 is not provided with particular data regarding the open roof assembly. Further, in the method according to the present invention, there is no need to determine a nominal electrical current or perform any other calibration step.

When performing the method according to the present invention, the moveable panel 2a is brought into the open position. This may be performed by the generic control unit 20 or may be performed by an operator. In another embodiment, the open roof assembly may already be in the open position as it may have been manufactured in the open position, for example. The method of the present invention is not limited to the method used to bring the open roof assembly in the open position.

The force sensitive sensor 22 is arranged in the roof opening 3a in such a way that the moveable panel 2a will move against the force sensitive sensor 22, when the moveable panel 2a is driven by the generic control unit 20 towards the closed position, i.e. in a direction A.

Preferably starting at a distance from the force sensitive sensor 22, the moveable panel 2a is driven by the generic control unit 20 to a constant velocity. Preferably, the constant velocity is comparable to a velocity of the moveable panel 2a in normal operation. Although it has been found that the velocity of the moveable panel 2a has only a minor effect on the pinch force, it may be preferred that normal operating conditions are applied during the test method.

While moving at the constant velocity, the moveable panel 2a engages the force sensitive sensor 22 and the elastic spring 24 is compressed. During compression of the spring 24, a counterforce exerted by the elastic spring 24 increases and, consequently, the drive motor needs to increase its torque to overcome the increasing counterforce. In order to provide a higher torque, the drive motor consumes more electrical current. After a period, the drive motor is switched off. The period may be predetermined in time, but may also be determined based on an amount of a displacement or speed of the moveable panel 2a, be determined based on the electrical current being consumed by the drive motor or be determined based on a force exerted on the force sensitive sensor 22, for example. Any other suitable criterion may be applied as well as the actual moment of switching off does not affect the method according to the present invention, as apparent to those skilled in the art.

During the above described operation of the open roof assembly, the generic control unit 20 not only controls the drive motor, but simultaneously receives force data from the force sensitive sensor 22. The force data represent a force exerted on the force sensitive sensor 22. Before the moveable panel 2a engages the force sensitive sensor 22, the force data reflect that no force is exerted. Upon engagement, the force data will show an increasing force.

Further, the generic control unit 20 may monitor the electrical current consumed by the drive motor. For example, an electrical current sensor may be embedded in the drive circuitry 20a and the electrical current sensor may supply current data to the generic control unit 20.

Further, a displacement of the moveable panel 2a may be monitored by a displacement sensor. For example, the drive motor may be provided with a Hall sensor that determines a number of rotations of the drive motor or a dedicated position measurement system may be applied. As a Hall sensor is commonly used in an open roof assembly, the use of the already available Hall sensor may be cost-effective and sufficient. Irrespective of the kind of sensor used, the displacement sensor supplies displacement data to the generic control unit 20. The generic control unit 20 may derive from the displacement data a speed of the moveable panel 2a.

As soon as the drive motor is switched off after engagement of the moveable panel 2a with the force sensitive sensor 22, the generic control unit 20 derives from the obtained data, in particular from the electrical current data, the displacement data and the force data, a system property constant of the open roof assembly, wherein such system property constant is representative of a maximum pinch force in normal operation. According to the invention, such system property constant is a torque-related constant, wherein the torque-related constant provides a relation between the electrical current consumed by the drive motor and the torque generated in the open roof assembly.

A suitable torque-related constant may be derived starting from a well-known equation defining the torque of a DC motor as a function of the electrical current:

$$T = k_t \cdot I \qquad\qquad (Eq. 1)$$

wherein T is the torque in Nm, $k_t$ a motor constant in Nm/A and I the electrical current in A. In the present invention, this equation is however not applied to the torque of the drive motor, but to the torque of the open roof assembly, including the drive motor, the drive assembly and any other relevant part of the open roof assembly as all the contributions of the parts are relevant to a resulting pinch force. Hence, $k_t$ becomes a system property constant.

By differentiating over time, taking into account that the motor constant does not change over time as it is a constant, and rewriting, Eq. 1 becomes

$$k_t = dT / dI \qquad (Eq.\ 2)$$

wherein dT represents a change in the generated torque and dI represents a change in electrical current.

In the method according to the present invention, the torque corresponds to a torque of the open roof assembly ($T_{roof}$) and a torque of the force sensitive sensor ($T_{sensor}$):

$$T = T_{roof} + T_{sensor} \qquad (Eq.\ 3)$$

Applying the method according to the present invention over a trajectory of the moveable panel 2a, where the trajectory is straight and smooth and where the moveable panel 2a does not engage other elements, like the wind deflector 4, it may be assumed that a variation of the torque of the roof $T_{roof}$ will be small, whereas the torque of the sensor $T_{sensor}$ will change significantly, when the moveable panel 2a has engaged and compresses the elastic spring 24. Thus, it may be assumed:

$$dT_{sensor} >> dT_{roof} \qquad (Eq.\ 4)$$

Based on Eq. 4, a change in the roof torque $dT_{roof}$ may be ignored and the change in torque dT in the Eq. 2 may be replaced by the change in sensor torque $dT_{sensor}$:

$$k_t = dT_{sensor} / dI \qquad (Eq.\ 5)$$

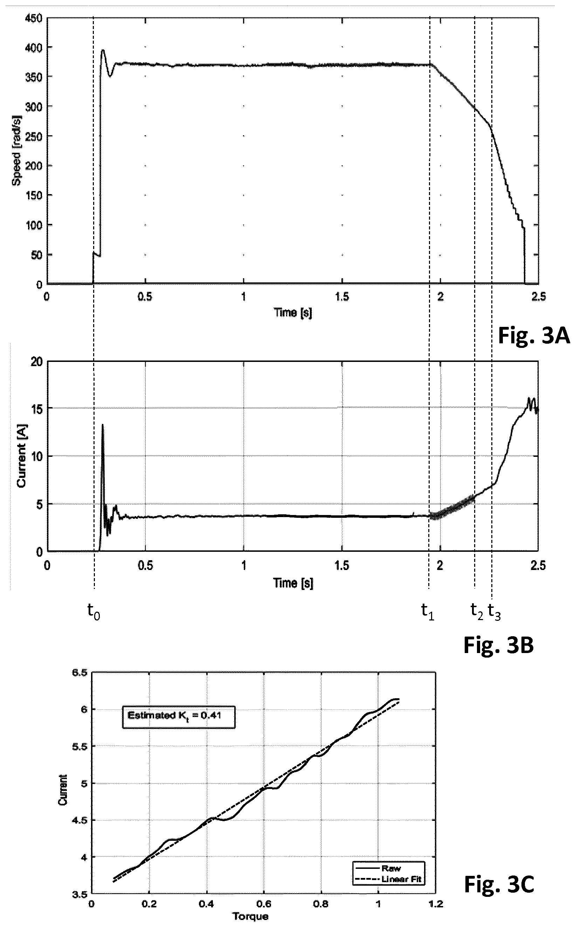

The generic control unit 20 may be configured to determine the system property constant $k_t$ based on Eq. 5 as is described hereinafter with reference to Figs. 3A - 4B.

Fig. 3A shows a graph showing the rotation speed of the drive motor in rad/s over time as derived during the method according to the present invention. Fig. 3B shows a corresponding graph of the electrical current in A as a function of time.

At time $t_0$, the generic control unit has initiated the method. After a short start-up period, the speed of the drive motor becomes a constant speed and a correspondingly constant electrical current is consumed.

At time $t_1$, the moveable panel engages the force sensitive sensor. The speed linearly decreases (see Fig. 3A) and the torque required from the drive motor increases, due to which the consumed electrical current linearly increases (see Fig. 3B).

After time $t_3$, the speed and the electrical current change non-linearly. This may for example be due to the elastic spring having been compressed beyond its linear compression range. As Eq. 1 is only valid in a linear behaviour range, Eq. 5 is applicable only in the time period from time $t_1$ - time $t_3$.

In the illustrated embodiment, the generic control unit stops the method as soon as the speed of the motor has become zero. However, as above mentioned, any other criterion may be applied, provided sufficient data is available in the linear range in the period from time $t_1$ - time $t_3$. In the illustrated embodiment, the data acquired in the period from time $t_1$ - time $t_2$ is used to derive the torque-related constant $k_t$ as the system property constant.

Note that the curve in Fig. 3B is embossed in the period from time $t_1$ - time $t_2$ to indicate the data used for determining the torque-related constant. The actual measurement data correspond to a thinner line, wherein the line width is comparable to the curve before time $t_1$ and after time $t_2$.

In Fig. 3C, the torque and electrical current as determined from the period time $t_1$ - time $t_2$ are shown in relation to each other. In particular, on the horizontal axis, the determined torque is shown in arbitrary units. On the vertical axis, the corresponding electrical current is shown. A solid line connects the measured torque and electrical current data points. A dashed line shows a linear regression line through said measured data points. As apparent from Fig. 3C, the linear regression line appears a good approximation of the measurement data.

According to Eq. 5, a slope of the linear regression curve provides the torque-related constant $k_t$. The slope of the regression curve is determined to be about 0.41. Thus, the method according to the present invention and using the device according to the present invention as illustrated in Figs. 2A - 2B, the torque-related constant may be derived without the use of a dedicated control unit or any other control unit that will be used, when the open roof assembly is mounted in a vehicle.

In order to show a relation between the torque-related constant and the actual maximum pinch force, a number of open roof assemblies have been tested in accordance with the present invention and their maximum pinch force with their dedicated control unit has been measured.

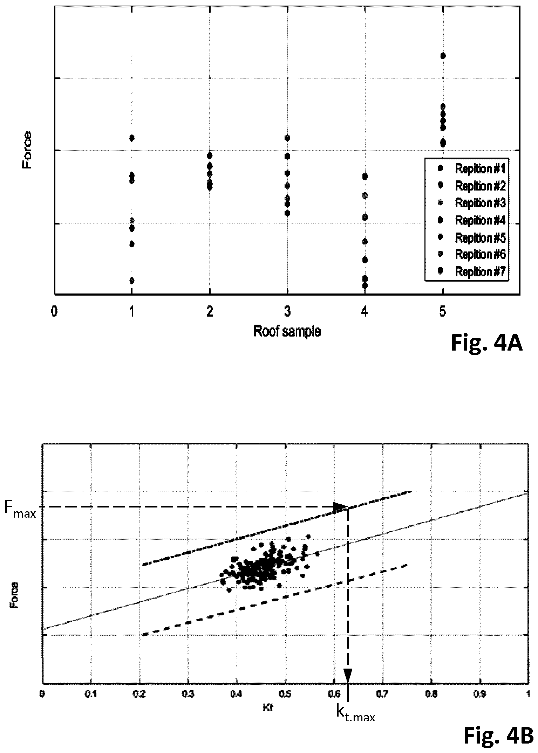

Fig. 4A shows the pinch force for five randomly selected samples of an open roof assembly, wherein the pinch force is shown on the vertical axis in arbitrary units and it is noted that the intersection of the vertical axis with the horizontal axis does not correspond to a force of 0N. The graph has been optimized to illustrate a variation in a measured maximum pinch force with repeated experiments. In particular, for each of the five selected sample open roof assemblies, a maximum pinch force is measured seven times, wherein the sample open roof assemblies were driven by a dedicated control unit. As apparent from Fig. 4A, the maximum pinch force for five different samples of a same open roof assembly may vary significantly. Moreover, the seven repetitions of the measurement for a single sample also varied. The measured pinch forces for repeated measurements of a single sample open roof assembly were spread in a range, wherein for some samples the range was small and for other samples larger. Due to the spread in maximum pinch force as shown in Fig. 4A, it is noted that any confirmation of a relation between the torque-related constant and the maximum pinch force may show a lowered correlation coefficient.

In order to show a relation between the torque-related constant and the maximum pinch force, a single value for the maximum pinch force is used. Such single value may be one of the measurement values, an average, a median, a minimum, a maximum, or any other mathematical value derivable from the different values. Still, the present invention is not limited to such reduction to a single value. In an embodiment using more complex statistical mathematics, all measured values may be taken into account.

In Fig. 4B, the median value of a maximum pinch force measured for a larger number of samples of a same open roof assembly has been plotted as a function of their torque-related constant $k_t$ as determined in accordance with the present invention. On the horizontal axis, the determined torque-related constant is shown in arbitrary units and the vertical axis shows the maximum pinch force is shown in arbitrary units. Similar to Fig. 4A, it is noted that the intersection of the vertical axis with the horizontal axis does not correspond to a force of 0N.

As apparent from Fig. 4B, the torque-related constant varied from about 0.36 - about 0.58. A solid curve shows a linear regression line through the data points having a significant correlation coefficient that is larger than 0.5. Taking into account the variation in maximum pinch force as shown in Fig. 4A, it is determined that this correlation coefficient is sufficient to assume a sufficiently strong relation between the maximum pinch force and the torque-related constant. So, based on the determined torque-related constant $k_t$, a maximum pinch force may be predicted.

Moreover, for an acceptance test at the end of a manufacturing process, a confidence band may be selected. The confidence band defines a range in which the maximum pinch force is expected to be. For example, as shown in Fig. 4B, a lower limit (dashed line) and an upper limit (dash-dotted line) may be determined. These lines may be drawn e.g. visually based on the data plotted in a graph or they may be determined using statistical mathematics. For example, a 95% confidence interval may be determined using known statistical methods and corresponding lower and upper limits may be determined and used. Then, with a selected maximum pinch force $F_{max}$, a maximum acceptable torque-related constant $k_{t,max}$ may be derived based on the upper limit of the confidence band.

The selected maximum pinch force $F_{max}$ may be equal to a maximum pinch force allowed by legislation or may be selected lower.

It is noted that a stiffness of the elastic spring (Fig. 2B: 24) in the present invention may have any value, provided that the stiffness provides a significant larger change in torque than the open roof assembly itself (see Eq. 4). Still, the stiffness may be suitably selected corresponding to legislative norms. In particular, the legislation usually provides a detailed description of a test to be performed for determining whether the maximum pinch force is not exceeded. For example, it may be determined that the maximum pinch force is to be determined by blocking the moveable panel with a bar having a diameter of 4 mm and having a stiffness of 10 N/mm. Then, a stiffness of the elastic spring 24 may be suitably selected accordingly to have a stiffness of 10 N/mm. Verification whether Eq. 4 is fulfilled could be achieved by repeating the method with another elastic spring, e.g. having a stiffness of 20 N/mm. If the results are similar, it may safely be assumed that Eq. 4 was fulfilled and the change in roof torque ($T_{roof}$) could indeed be ignored.

Detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in expectedly any appropriately detailed structure. In particular, features presented and described in separate dependent claims may be applied in combination and any advantageous combination of such claims are herewith disclosed.

Further, it is contemplated that structural elements may be generated by application of three-dimensional (3D) printing techniques. Therefore, any reference to a structural element is intended to encompass any computer executable instructions that instruct a computer to generate such a structural element by three-dimensional printing techniques or similar computer controlled manufacturing techniques. Furthermore, any such reference to a structural element is also intended to encompass a computer readable medium carrying such computer executable instructions.

Further, the terms and phrases used herein are not intended to be limiting, but rather to provide an understandable description of the invention. The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language). The term coupled, as used herein, is defined as connected, although not necessarily directly.

**Claims**

1. A method for testing an open roof assembly, wherein the open roof assembly comprises a frame (5) having a roof opening (3a), a moveably arranged closure member (2a) and a motor drive assembly (9) for moving the closure member, wherein in a closed position the roof opening is covered by the closure member and in an open position the roof opening is at least partly uncovered, the method comprising

   a. providing a test device, the test device comprising a generic control unit (20), a force sensitive sensor (22) operatively coupled to the generic control unit and configured to output force data representing a force exerted on the force sensitive sensor, a drive circuitry (20a) operatively coupled to the generic control unit and configured to operate the motor drive assembly of the open roof assembly, an electrical current sensor configured to output current data representing an electrical current to a motor of the motor drive assembly and a displacement sensor configured for outputting displacement data representing a displacement of the closure member;
   b. operatively coupling the motor drive assembly to the drive circuitry;
   c. positioning the force sensitive sensor in the roof opening;
   d. operating the generic control unit to

      d1. move the closure member from the open position to the closed position such that the closure member collides with the force sensitive sensor;
      d2. receive the corresponding force data from the force sensitive sensor and to receive the current data and the displacement data, wherein the current data and the displacement data correspond to step d1; and

   **characterized by** further operating the generic control unit to

      d3. determine from the force data a system property constant, wherein the system property constant is representative for a maximum pinch force of the open roof assembly, and wherein the system property constant is a torque-related constant correlating the electrical current supplied to the motor and a generated torque; and
      d4. predict a maximum pinch force based on the determined torque-related constant.

2. The method according to claim 1, wherein the torque-related constant is determined as a ratio of a change in electrical current and a corresponding change in torque.

3. The method according to claim 1, wherein the displacement sensor is a Hall sensor coupled to the motor, wherein the Hall sensor is arranged and configured to determine a rotation of the motor.

4. The method according to claim 1, wherein the force sensitive sensor is provided with a predetermined stiffness.

5. The method according to claim 4, wherein the force sensitive sensor is provided with a calibrated linear spring having a predetermined spring constant to provide for the predetermined stiffness.

6. Test device for testing an open roof assembly, wherein the open roof assembly comprises a frame (5) having a roof opening (3a), a moveably arranged closure member (2a) and a motor drive assembly (9) for moving the closure member, wherein in a closed position the roof opening is covered by the closure member and in an open position the roof opening is uncovered, and

   wherein the test device comprises:

      • a generic control unit (20);
      • a force sensitive sensor (22) operatively coupled to the generic control unit and configured to output force data representing a force exerted on the force sensitive sensor and for being position in the roof opening; and
      • a drive circuitry (20a) operatively coupled to the generic control unit and configured to operate the motor drive assembly of the open roof assembly and for being operatively coupled to the motor drive assembly;
      • an electrical current sensor configured to output current data representing an electrical current to a motor of the motor drive assembly; and
      • a displacement sensor configured for outputting displacement data representing a displacement of the closure member; and

   wherein the electrical current sensor and the displacement sensor are operatively coupled to the generic control unit for the generic control unit to receive the current data and the displacement data; and
wherein the generic control unit is configured to:

- move the closure member from the open position to the closed position such that the closure member collides with the force sensitive sensor;
- receive the corresponding force data from the force sensitive sensor; and

**characterized in that** the generic control unit is further configured to:

- determine from the force data a system property constant, wherein the system property constant is representative for a maximum pinch force of the open roof assembly, and wherein the system property constant is a torque-related constant correlating the electrical current supplied to the motor and a generated torque; and
- predict a maximum pinch force based on the torque-related constant.

7. The test device according to claim 6, wherein the displacement sensor is a Hall sensor coupled to the motor, the Hall sensor being arranged and configured to determine a rotation of the motor.

8. The test device according to claim 6, wherein the force sensitive sensor is provided with a calibrated linear spring having a predetermined spring constant.

9. A computer program product comprising computer readable instructions for instructing a generic control unit (20) to execute the steps d1 - d3 of the method according to claim 1.


**Patentansprüche**

1. Verfahren zum Testen einer Offendachbaugruppe, wobei die Offendachbaugruppe aufweist einen Rahmen (5), der eine Dachöffnung (3a) hat, ein bewegbar angeordnetes Verschließelement (2a) und eine Motorantriebseinrichtung (9) zum Bewegen des Schließelements, wobei die Dachöffnung in einer geschlossen-Position von dem Verschließelement abgedeckt ist und die Dachöffnung in einer offen-Position zumindest teilweise nicht-abgedeckt ist, wobei das Verfahren aufweist

a. Bereitstellen einer Testvorrichtung, wobei die Testvorrichtung aufweist eine allgemeine Steuereinheit (20), einen Kraft-sensitiven Sensor (22), der mit der allgemeinen Steuereinheit betriebsverbunden ist und konfiguriert ist, um Kraftdaten auszugeben, die eine auf den Kraft-sensitiven Sensor ausgeübte Kraft repräsentieren, einen Antriebsschaltkreis (20a), der mit der allgemeinen Steuereinheit betriebsverbunden ist und konfiguriert ist, um die Motorantriebsbaugruppe der Offendachbaugruppe zu betreiben, einen elektrischer-Strom-Sensor, der konfiguriert ist, um Stromdaten auszugeben, die einen elektrischen Strom zu einem Motor der Motorantriebsbaugruppe repräsentieren, und einen Verlagerungssensor, der konfiguriert ist, um Verlagerungsdaten auszugeben, die eine Verlagerung des Verschließelements repräsentieren,
b. Betriebsverbinden der Motorantriebsbaugruppe mit dem Antriebsschaltkreis,
c. Positionieren des Kraft-sensitiven Sensors in der Dachöffnung,
d. Betreiben der allgemeinen Steuereinheit, um

d1. das Verschließelement von der offen-Position zu der geschlossen-Position zu bewegen, sodass das Verschließelement mit dem Kraft-sensitiven Sensor kollidiert,
d2. die korrespondierenden Kraftdaten von dem Kraft-sensitiven Sensor zu empfangen und um die Stromdaten und die Verlagerungsdaten zu empfangen, wobei die Stromdaten und die Verlagerungsdaten zu Schritt d1 korrespondieren, und **gekennzeichnet durch** ferner Betreiben der allgemeinen Steuereinheit, um
d3. aus den Kraftdaten eine
Systemeigenschaftskonstante zu ermitteln, wobei die Systemeigenschaftskonstante repräsentativ ist für eine maximale Andruckkraft der Offendachbaugruppe, und wobei die Systemeigenschaftskonstante eine Drehmoment-bezogene Konstante ist, welche den dem Motor zugeführten elektrischen Strom und ein erzeugtes Drehmoment korreliert, und
d4. eine maximale Andruckkraft vorherzusagen basierend auf der ermittelten Drehmoment-bezogenen Konstante.

**2.** Verfahren gemäß Anspruch 1, wobei die Drehmoment-bezogene Konstante ermittelt wird als ein Verhältnis einer elektrischer -Strom-Änderung und einer korrespondierenden Drehmoment-Änderung.

**3.** Verfahren gemäß Anspruch 1, wobei der Verlagerungssensor ein Hall-Sensor ist, der mit dem Motor verbunden ist, wobei der Hall-Sensor angeordnet und konfiguriert ist, um eine Rotation des Motors zu ermitteln.

**4.** Verfahren gemäß Anspruch 1, wobei der Kraft-sensitive Sensor mit einer vorbestimmten Steifheit bereitgestellt ist.

**5.** Verfahren gemäß Anspruch 4, wobei der Kraft-sensitive Sensor mit einer kalibrierten Linearfeder versehen ist, die eine vorbestimmte Federkonstante hat, um die vorbestimmte Steifheit bereitzustellen.

**6.** Testvorrichtung zum Testen einer Offendachbaugruppe, wobei die Offendachbaugruppe aufweist einen Rahmen (5), der eine Dachöffnung (3a) hat, ein bewegbar angeordnetes Verschließelement (2a) und eine Motorantriebseinrichtung (9) zum Bewegen des Schließelements, wobei die Dachöffnung in einer geschlossen-Position von dem Verschließelement abgedeckt ist und die Dachöffnung in einer offen-Position nicht-abgedeckt ist, und

wobei die Testvorrichtung aufweist:

- eine allgemeine Steuereinheit (20),
- einen Kraft-sensitiven Sensor (22), der mit der allgemeinen Steuereinheit betriebsverbunden ist und konfiguriert ist, um Kraftdaten auszugeben, die eine auf den Kraft-sensitiven Sensor ausgeübte Kraft repräsentieren, und
- einen Antriebsschaltkreis (20a), der mit der allgemeinen Steuereinheit betriebsverbunden ist und konfiguriert ist, um die Motorantriebsbaugruppe der Offendachbaugruppe zu betreiben und um mit der Motorantriebsbaugruppe betriebsverbunden zu sein,
- einen elektrischer-Strom-Sensor, der konfiguriert ist, um Stromdaten auszugeben, die einen elektrischen Strom zu einem Motor der Motorantriebsbaugruppe repräsentieren, und
- einen Verlagerungssensor, der konfiguriert ist, um Verlagerungsdaten auszugeben, die eine Verlagerung des Verschließelements repräsentieren, und

wobei die allgemeine Steuereinheit konfiguriert ist, um:

- das Verschließelement von der offen-Position zu der geschlossen-Position zu bewegen, sodass das Verschließelement mit dem Kraft-sensitiven Sensor kollidiert,
- die korrespondierenden Kraftdaten von dem Kraft-sensitiven Sensor zu empfangen und

**dadurch gekennzeichnet, dass** die allgemeine Steuereinheit ferner konfiguriert ist, um:

- aus den Kraftdaten eine Systemeigenschaftskonstante zu ermitteln, wobei die Systemeigenschaftskonstante repräsentativ ist für eine maximale Andruckkraft der Offendachbaugruppe, und wobei die Systemeigenschaftskonstante eine Drehmoment-bezogene Konstante ist, welche den dem Motor zugeführten elektrischen Strom und ein erzeugtes Drehmoment korreliert, und
- eine maximale Andruckkraft vorherzusagen basierend auf der ermittelten Drehmoment-bezogenen Konstante.

**7.** Testvorrichtung gemäß Anspruch 6, wobei der Verlagerungssensor ein Hall-Sensor ist, der mit dem Motor verbunden ist, wobei der Hall-Sensor angeordnet und konfiguriert ist, um eine Rotation des Motors zu ermitteln.

**8.** Testvorrichtung gemäß Anspruch 6, wobei der Kraft-sensitive Sensor mit einer kalibrierten Linearfeder versehen ist, die eine vorbestimmte Federkonstante hat.

**9.** Computerprogrammprodukt, aufweisend computerlesbare Instruktionen zum Anweisen einer allgemeinen Steuereinheit (20), die Schritte d1-d3 des Verfahrens gemäß Anspruch 1 durchzuführen.

**Revendications**

**1.** Procédé pour tester un ensemble de toit ouvrant, dans lequel l'ensemble de toit ouvrant comprend un cadre (5) présentant une ouverture de toit (3a), un élément de fermeture (2a) agencé de manière mobile et un ensemble d'entraînement de moteur (9) pour déplacer l'élément de fermeture, dans lequel dans une position fermée l'ouverture de toit est couverte par l'élément de fermeture et dans une position ouverte l'ouverture de toit est au moins en partie découverte, le procédé comprenant

a. la fourniture d'un dispositif de test, le dispositif de test comprenant une unité de commande générique (20), un capteur sensible à la force (22) couplé de manière fonctionnelle à l'unité de commande générique et configuré pour sortir des données de force représentant une force exercée sur le capteur sensible à la force, une circuiterie d'entraînement (20a) couplée de manière fonctionnelle à l'unité de commande générique et configurée pour faire fonctionner l'ensemble d'entraînement de moteur de l'ensemble de toit ouvrant, un capteur de courant électrique configuré pour sortir des données de courant représentant un courant électrique à un moteur de l'ensemble d'entraînement de moteur et un capteur de déplacement configuré pour sortir des données de déplacement représentant un déplacement de l'élément de fermeture ;
b. le couplage fonctionnel de l'ensemble d'entraînement de moteur à la circuiterie d'entraînement ;
c. le positionnement du capteur sensible à la force dans l'ouverture de toit ;
d. l'actionnement de l'unité de commande générique pour

d1. faire se mouvoir l'élément de fermeture à partir de la position ouverte vers la position fermée de telle sorte que l'élément de fermeture entre en collision avec le capteur sensible à la force ;
d2. recevoir les données de force correspondantes du capteur sensible à la force et recevoir les données de courant et les données de déplacement, dans lequel les données de courant et les données de déplacement correspondent à l'étape d1 ; et
**caractérisé par** l'actionnement supplémentaire de l'unité de commande générique pour
d3. déterminer à partir des données de force une constante de propriété de système, dans lequel la constante de propriété de système est représentative d'une force de pincement maximale de l'ensemble de toit ouvrant, et dans lequel la constante de propriété de système est une constante liée au couple corrélant le courant électrique amené au moteur et un couple généré ; et
d4. prédire une force de pincement maximale sur la base de la constante liée au couple déterminée.

2. Procédé selon la revendication 1, dans lequel la constante liée au couple est déterminée comme un rapport d'un changement de courant électrique et d'un changement de couple correspondant.

3. Procédé selon la revendication 1, dans lequel le capteur de déplacement est un capteur à effet Hall couplé au moteur, dans lequel le capteur à effet Hall est agencé et configuré pour déterminer une rotation du moteur.

4. Procédé selon la revendication 1, dans lequel le capteur sensible à la force est pourvu d'une rigidité prédéterminée.

5. Procédé selon la revendication 4, dans lequel le capteur sensible à la force est pourvu d'un ressort linéaire étalonné présentant une constante de rappel prédéterminée pour assurer la rigidité prédéterminée.

6. Dispositif de test pour tester un ensemble de toit ouvrant, dans lequel l'ensemble de toit ouvrant comprend un cadre (5) présentant une ouverture de toit (3a), un élément de fermeture (2a) agencé de manière mobile et un ensemble d'entraînement de moteur (9) pour déplacer l'élément de fermeture, dans lequel dans une position fermée l'ouverture de toit est couverte par l'élément de fermeture et dans une position ouverte l'ouverture de toit est découverte, et

dans lequel le dispositif de test comprend :

• une unité de commande générique (20) ;
• un capteur sensible à la force (22) couplé de manière fonctionnelle à l'unité de commande générique et configuré pour sortir des données de force représentant une force exercée sur le capteur sensible à la force et pour être positionné dans l'ouverture de toit ; et
• une circuiterie d'entraînement (20a) couplée de manière fonctionnelle à l'unité de commande générique et configurée pour faire fonctionner l'ensemble d'entraînement de moteur de l'ensemble de toit ouvrant et pour être couplée de manière fonctionnelle à l'ensemble d'entraînement de moteur ;
• un capteur de courant électrique configuré pour sortir des données de courant représentant un courant électrique à un moteur de l'ensemble d'entraînement de moteur ; et
• un capteur de déplacement configuré pour sortir des données de déplacement représentant un déplacement de l'élément de fermeture ; et

dans lequel le capteur de courant électrique et le capteur de déplacement sont couplés de manière fonctionnelle à l'unité de commande générique pour que l'unité de commande générique reçoive les données de courant et les données de déplacement ; et

dans lequel l'unité de commande générique est configurée pour :

- • faire se mouvoir l'élément de fermeture à partir de la position ouverte vers la position fermée de telle sorte que l'élément de fermeture entre en collision avec le capteur sensible à la force ;
- • recevoir les données de force correspondantes du capteur sensible à la force ; et

**caractérisé en ce que** l'unité de commande générique est en outre configurée pour :

- • déterminer à partir des données de force une constante de propriété de système, dans lequel la constante de propriété de système est représentative d'une force de pincement maximale de l'ensemble de toit ouvrant, et dans lequel la constante de propriété de système est une constante liée au couple corrélant le courant électrique amené au moteur et un couple généré ; et
- • prédire une force de pincement maximale sur la base de la constante liée au couple.

7. Dispositif de test selon la revendication 6, dans lequel le capteur de déplacement est un capteur à effet Hall couplé au moteur, le capteur à effet Hall étant agencé et configuré pour déterminer une rotation du moteur.

8. Dispositif de test selon la revendication 6, dans lequel le capteur sensible à la force est pourvu d'un ressort linéaire étalonné présentant une constante de rappel prédéterminée.

9. Produit-programme d'ordinateur comprenant des instructions lisibles par ordinateur pour donner l'instruction à une unité de commande générique (20) d'exécuter les étapes d1 - d3 du procédé selon la revendication 1.

**Fig. 1A**

**Fig. 1B**

**Fig. 2A**

**Fig. 2B**

Fig. 3A

Fig. 3B

Fig. 3C

Fig. 4A

Fig. 4B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 205192673 U
- CN 107782371
- CN 106197990
- CN 107389182
- CN 107560843
- CN 104977110
- US 2002117983 A